Europäisches Patentamt

European Patent Office

Office européen des brevets

(19)

(11) Publication number: **0 249 417 B1**

# EUROPEAN PATENT SPECIFICATION

(12)

(45) Date of publication of patent specification: **30.09.92**   (51) Int. Cl.5: **G06K 11/12**

(21) Application number: **87305020.7**

(22) Date of filing: **05.06.87**

(54) **Touch sensitive device with increased linearity.**

(30) Priority: **09.06.86 US 871991**

(43) Date of publication of application:
**16.12.87 Bulletin 87/51**

(45) Publication of the grant of the patent:
**30.09.92 Bulletin 92/40**

(84) Designated Contracting States:
**DE FR GB IT NL**

(56) References cited:
**EP-A- 0 089 295**
**EP-A- 0 204 651**
**US-A- 4 079 194**
**US-A- 4 214 122**
**US-A- 4 665 283**

(73) Proprietor: **ELOGRAPHICS, INC.**
**105 Randolph Road**
**Oak Ridge Tennessee 37830(US)**

(72) Inventor: **Gibson, William A.**
**2404 W. Gallaher Ferry Road**
**Knoxville Tennessee 37932(US)**
Inventor: **Talmage, John E., Jr.**
**129 Hendrix Drive**
**Oak Ridge Tennessee 37830(US)**

(74) Representative: **Auckland, Jacqueline et al**
**Raychem Limited Intellectual Property Law**
**Department Faraday Road Dorcan**
**Swindon, Wiltshire SN3 5HH(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 249 417 B1

## Description

The present invention relates to devices for determining the coordinates of a location in a two-dimensional system, and more particularly to an electrographic touch sensor that is easily fabricated and whereby such points can be determined with good linearity throughout an increased proportion of the area of the sensor.

There are many fields of technology where it is desirable to generate electrical signals that are proportional to some physical point in a two-dimensional planar or non-planar coordinate system. For example, it is often desirable to accurately reconstruct graphs or other technical data representation, to store such data in computers, or to provide touch sensors for a variety of applications. A device which has come into use for this purpose is known as an electrographic sensor wherein orthogonal electrical fields are produced, one in a X direction and one in a Y direction, in the coordinate system. Contact or other interaction with the sensor at a specific location with a finger or other object causes the generation of signals that are representative of the X and Y coordinates of that particular point.

Orthogonal X and Y electrical fields of the devices of this type have been generated by numerous types of systems. For example, parallel electrodes have been placed on opposite edges of two spaced apart sheets with the electrodes on one sheet orientated orthogonally to those on the second sheet. The electrical field in one direction is generated in one sheet with a voltage applied to the set of electrodes on that sheet, and the orthogonal field is generated in the second sheet by applying a voltage to its electrodes. In another configuration, however, the orthogonal electrical fields are generated in a single sheet, with various configurations of electrodes along the edges of the sheet, with the voltage applied to these electrodes in a properly timed sequence. One typical group of single sheet sensors utilizes resistive-type electrodes in contrast to another group that utilize diodes to apply the necessary voltages.

In the single sheet type apparatus using resistive electrodes, it is well recognised that equipotential lines generated by the electrodes in the centre of the sheet are generally straight parallel lines in each of the directions. However, as the perimeter of the sheet is approached, these equipotential lines deviate from the ideal by being non-parallel curved lines. The curvature, i.e. bow, is produced by the voltage drop in the resistive electrodes. If a high linearity device is desired, such can be achieved near the centre of the device, but not at the edge of the device because of these non-parallel bowed equipotential lines near the edge.

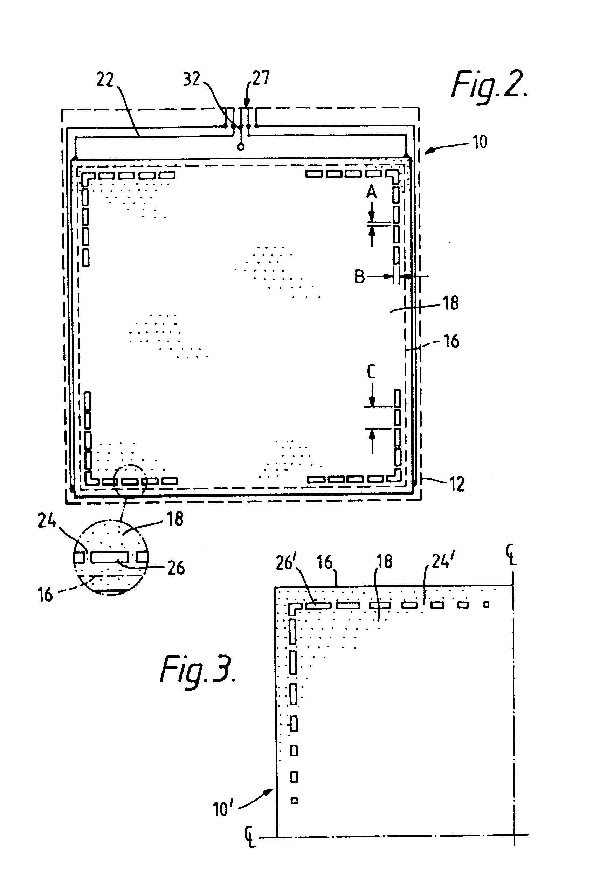

In order to achieve high linearity throughout the larger area of the device, many special systems of electrodes have been devised to increase the region of linearity of the instrument. For example, in U.S. Patent No. 3,798,370, for the application of the voltage to the sheet are arranged in a curve or bow along each edge whereby the voltage drops in the resistive element along the edges of the device are at least partially compensated. This is discussed with reference to Figure 2 therein.

In a like manner, special electrode configurations are shown and described in U.S. Patent No. 4,079,194, and in U.S. Patent No. 4,178,481. In these patents, special electrode configurations are used to reduce the bow to increase the effective area of a given sized sensor.

Another complex "electrode" configuration is shown in U.S. Patent 4,293,734. These electrodes occupy a considerable space along the edge of the sensor (see Figures 3 and 8 of US 4293734 for example). Also, in US 4293734 the network disclosed combines both the peripheral resistance network and the electrodes for introducing potentials into the resistive layer whereby a change in one effects the other and thus does not provide individual adjustment.

Still another patent in the general field of "sensors" is U.S. Patent No. 4,493,104. In that patent is described a unit having a linear voltage drop and a linear voltage gradient along each edge. A linear voltage drop, as achieved, actually implies bowed equipotential field lines; this then would require some means for reducing the bow to achieve a maximum active area between the edges of the sensor. The patent does not address the matter of bowed fields.

Numerous types of sensors are utilized as an overlay to a video display such as a computer terminal in the form of a cathode ray tube. Such displays have outwardly curved (convex) edges. When sensors of the prior art with inwardly extending electrodes (or at least inwardly directed bowed fields) are used on these display devices, the active area of a sensor is less than the potentially available area of the display.

One system for reducing the bow in the equipotential lines, and thus increasing the effective size of a given sensor, is described in European Patent Application Publication No. 0186464. That system utilized a single row of electrodes along each edge of the resistive layer of the sensor where the length of the electrodes, their spacing and the amount of voltage applied to each is selected where by the voltage gradient along the line of the electrodes overcomes the voltage drop along a resistor element which provides the voltage to the electrodes.

2

We have discovered an alternative type of touch sensor to that described in EP 0186464 which provides a linear output response over an enhanced proportion of the surface area of the sensor by reducing the bow of equipotential lines along edges of the sensor. The present invention provides a position touch sensor which comprises:

(a) a resistive layer having a selected substantially uniform resistivity throughout said layer;

(b) a resistance element having elongate segments respectively positioned generally along each of the perimeter edges of said resistive layer for providing orthogonal electrical fields in said resistive layer, each of said segments of the resistance element, (i) having opposite ends joined to proximate ends of the adjoining segments of the resistance element, and (ii) being in electrical connection with said resistive layer;

(c) a plurality of discontinuous insulator regions of selected effective lengths in said resistive layer arranged along a selected path alongside the said segments of the resistance element, and defining spaces of selected effective lengths and width between adjacent of said insulator regions, said resistivity of said resistive layer producing in said spaces resister electrode elements having selected values of resistance, said selected effective lengths of said insulator regions and said selective resistance values of said resistor electrode elements being selected to produce a selected voltage gradient along said path to compensate for any voltage drop along said resistance element when the said orthogonal fields are introduced into the resistive layer through said resister electrode elements; and

(d) means for deriving output signals corresponding to coordinates of a selected point on said resistive layer.

The positioning of the insulator regions providing specifically sized and spaced resistor electrode elements compensates for any voltage drop along the resistance element. Without this compensation, for example if the resistance element were used alone, there would be a bow of the equipotential lines along the edges of the sensor, in which bowed region there would be a non-uniform response. The present invention advantageously reduces the size of that bow. Thus the compensation is arranged such that here is a substantially linear response over an enhanced proportion of the sensor. In preferred embodiments according to the invention the surface area over which there is a linear response is referred to as "an active area".

Some specific advantages of the sensor according to the invention are now mentioned. The sensor may be manufactured such that it has a minimum area devoted to means for generating electrical fields therein. The sensor may be used over the screen of video display devices which result in an optimum utilization of the space thereof. A single sheet sensor may be made that can be inexpensively produced which will substantially reduce, or eliminate, the bow normally found in the prior art devices.

According to the present invention, there is provided a layer having a uniform resistivity. This layer may be either transparent or opaque and may be formed using conventional technology. Positioned in electrical connection with this layer is the said resistance element by which selected voltages can be applied to the resistive layer along its edges. Current flow from the resistance element into the resistive layer is restricted to regions of selected width by providing an aligned row of insulator regions, for example by providing that the resistive layer comprises a material that is absent in the insulator regions, such that the current flow is restricted to being through the spaces between those insulator regions. The insulator regions are preferably relatively long, preferably in the direction along the row. This limitation of current flow to the intervening spaces produces a selected voltage gradient along the row. Specifically, the effective voltage gradient along the row is selected to counteract the bow that otherwise would exist due to voltage drop along the resistance element.

In one embodiment according to the invention the resistance element is continuous, has a uniform resistivity and is in continuous contact with said resistive layer at its perimeter edges. The element is typically formed by depositing a strip of resistance material having a resistivity of about 0.01 the value of the resistivity of the resistive layer. A typical width of the strip is 0.25 cm (0.1 ins). Instead a strip of resistive tape can be used which produces either continuous or random electrical contact with the resistive layer. Also, a continuous resistance element can be used which is electrically connected to the resistive layer at discrete locations. This can be, for example, similar to the wire that is shown in the aforementioned European Patent Publication No. 0186464. Still another construction is a discontinuous resistance element. Any of the alternative constructions can be either applied to (or covered by) the resistive layer or can be positioned proximate the perimeter edges of the resistive layer.

The means for deriving output signals from the sensor may take a number of forms. Thus for example the means may comprise: (a) a capacitive element for placement adjacent said resistive layer at said selected point, and a circuit connected to the ends of said resistance elements to measure the effect of said capacitive element at said selected point and to produce said output signals; or (b) a capacitive element for placement in contact with said resistive layer at said selected point, and a circuit connected between said capacitive element and the ends of said resistive elements to measure the effect of said capacitive element at said selected point and to produce said output signals; or (c) a resistive element for placement in contact with said resistive layer at said selected point, and a circuit connected between said resistive element and said ends of said resistance element to measure the effect of said resistive element at said selected point to produce said output signals; or (d) a circuit connected to said ends of said resistance elements to introduce orthogonal electrical fields in said resistive layer and a conductive means for contacting said resistive layer at said selected point to obtain voltage signals from said resistive layer at said point. In the latter case the conductive means is preferably a conductive flexible pick-off sheet uniformly spaced from said resistive layer and further comprises means for preventing inadvertent contact between said pick-off sheet and said resistive layer but permitting intentional contact at said selected point. In this case the circuit means may be connected between the pick-off sheet and the ends of the resistance elements to derive output signals corresponding to coordinates of a point of contact between the pick-off sheet and the resistive layer. The preferred means for deriving the output signal is the conductive pick-off sheet, but the other systems such as the conductive probe touching the resistive layer, or a capacitive or resistive element (finger or probe) placed adjacent (or contacting) a selected protion of the sensor, are also envisaged.

Certain insulator region lengths, widths, shapes and spacings are preferred. Preferably the insulator lengths and the spaces between them are rectangular. However, other configurations such as oval, circular etc are also suitable, particularly if the insulator regions are small in size.

In some sensor embodiments the control of the bow is most critical in the outer one third of each perimeter edge of the resistive layer, towards each corner. Thus in preferred embodiments the insulator regions are only provided in these outer one third regions, particularly to simplify fabrication. Such a configuration is typical for a small sensor e.g. 10 cm x 10 cm ( 4 x 4 inches).

The size, width and spacing of the insulator regions may be uniform or vary. For a small sensor (typically 10 x 10 cm) a uniform size and spacing sufficiently compensates for the voltage drop. However larger sensors experience a greater voltage drop along the resistance element. Hence a more careful generation of voltage gradients is desirable in these cases. For these applications it is desirable that the voltage gradient decreases from the corners or the sensor towards the centre of each edge. For these embodiments, in particular, but not exclusively, it is preferred that the selected effective length of said insulator regions decreases from each corner of said resistive layer toward a centreline of each of the perimeter edges of the resistive layer, and said effective length of the spaces between adjacent and said insulative regions increases from each corner of said resistive layer toward said centreline of said perimeter edges. Preferably also, all of said insulator regions are uniform in width perpendicular to said path. A larger sensor typically measures 30 cm x 30 cm (12 inches x 12 inches).

For a small sensor (typically 10 cm x 10 cm or 4 ins x 4 ins) preferred dimensions for the insulator regions are as follows:

|                                                    | Cm               |
|----------------------------------------------------|------------------|
| centre-centre spacing                              | 0.7 (0.25 inch)  |
| width                                              | 0.13 (0.05 inch) |
| space between, forming resistor electrode elements | 0.10 (0.04 inch) |

For such sizes. The resistor electrode elements (in the spaces between the insulator regions are 0.10 x 0.13 cm (0.04 x 0.05 ins). The actual resistance value is then dependant on the resistivity of the resistive layer.

For a larger sensor (typically 30 cm x 30 cm or 12 ins x 12 ins preferred dimensions for the insulator regions are as follows:

Length decreasing from corner to centre of edge of resistive layer from 2.54 cm to 0.51 cm (1.0 - 0.2 ins) Spaces between increasing from corner to centre of edge from 0.06 to 2.03 cm (0.025 - 0.8 ins)

For each size of sensor the resistivity of the resistive layer is preferably 10000 ohms per square, and the resistivity of the resistance element (typically a strip 0.25 cm = 0.1 ins wide) is preferably 100 ohms per square. Preferably the resistivity of the resistance element $R_E$ is about 0.01 times the resistivity of the resistive layer $R_L$.

The resistive layer can be provided on a substrate, for example by screen printing using an appropriate ink. The insulator regions can thus be formed by omitting the resistive material (e.g. ink) on those regions.

Embodiments of the present invention will now be described, by way of example, with reference to the accompanying drawings, wherein:

Figure 1 is a view of a device constructed according to the present invention with the components illustrated as separated (exploded);

Figure 2 is a plan view illustrating one embodiment of the present invention showing the surface area of the resistive layer and the leads for the resistance element and contact sheet, with the device mounted on a substrate; and;

Figure 3 is a partial plan view illustrating one quadrant of another embodiment of an arrangement of insulative regions, particularly for use on larger sensors.

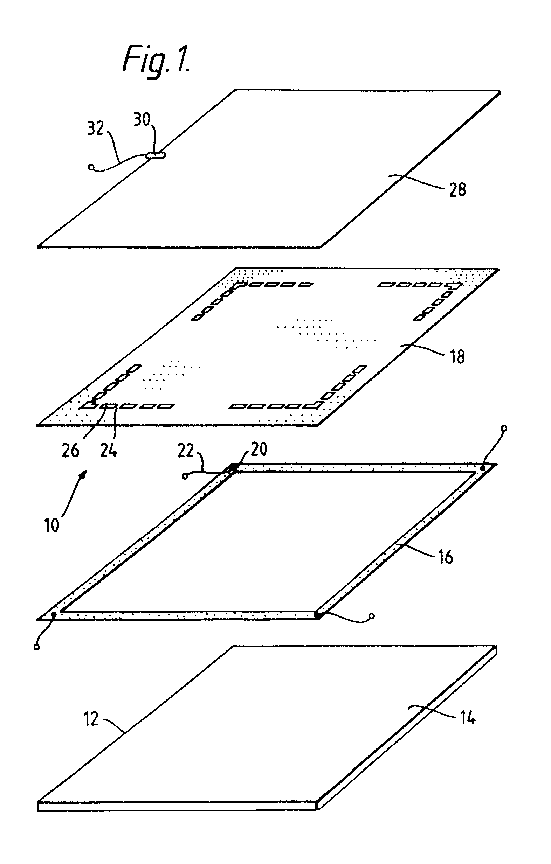

Referring now to Figure 1, shown therein generally at 10 is an exploded view of a device for accomplishing the above-stated objects. The illustrated components are separated in this Figure 1 only for the purposes of a clearer explanation rather than to imply that the components must be separable. In the specific embodiment illustrated in Figure 1, there is a support 12 which can be considered a substrate. This substrate 12 can be either rigid or flexible. Applied to an upper surface 14 of the substrate is a border member 16 of resistance material. The resistance value and configuration of this border will be discussed hereinafter. The purpose of this border is to introduce electric fields into a resistive layer 18 which is in electrical contact with the resistance border. An equivalent structure would be produced by applying the resistive layer 18 to surface 14 of the substrate, and then applying the resistance border 16 on top or in near proximity. In order to create the electric fields, appropriate voltages are applied at each of the corners, e.g. 20, of the resistance border 16 via electrical leads, e,g, 22.

The voltage is impressed upon the active area of the sensor through "resistor electrode elements" 24 that are produced through the use of insulator regions 26. As used herein, the term "insulator region" is meant to mean a region that is devoid of the resistive layer. These insulator regions 26 are narrow and substantially rectangular, and are orientated in a row near the inner edge of the resistance border 16. Typically, the insulator regions are created by preventing the deposition of the resistive layer is these regions, or by removing the deposited resistive layer by appropriate means. The width of these insulator regions 26 and their effective length (effective length facing active area) which affects their spacing along the row, are selected whereby the resultant resistor electrode elements therebetween achieve a voltage gradient along the row which compensates for the voltage drop along the resistance border 16.

The insulator regions are uniform in size and spacing, and positioned only at the outer one-third of each edge of resistive layer 18, towards each corner. This is preferred for small sensors, typically 10 cm x 10 cm.

The centre to centre spacings of the gaps between insulator regions is 0.7 cm. The width B (perpendicular to the active region) of the insulator regions is 0.13 cm and each space, A, therebetween, forming the resistor electrode elements is 0.1 cm. Thus the resistor electrode elements are 0.1 cm x 0.13 cm. The actual resistance depends also on the resistivity of the resistance layer. In this embodiment the resistivity of the resistive layer and the resistor electrode elements are 10000 and 100 ohms per square respectively.

The resistance element 16 as illustrated in the Figures is continuous resistance element in continuous contact with the resistive layer. This is formed, as indicated hereinafter, by depositing a strip of resistance material having a resistivity of about 0.01 the value of the resistivity of the resistive layer. The width of the strip is 0.1 inch.

Each corner of the resistance border 16 is connected through a trace, 22, to a connector 27 whereby the sensor 10 can be fastened to a cable leading to appropriate circuitry (Figure 2). This cable supplies, for example, voltages in proper sequential order whereby orthogonal equipotential fields are established within the resistive layer.

Referring again to Figure 1, shown therein is a pick-off sheet 28 which is a flexible conductive sheet having a lead 32 attached thereto at 30 (see Figure 2 as to lead 32 being attached to connector 27. Although not shown, islands of insulative material are typically interposed between the resitive layer 18 and the pick-off sheet 28 to prevent inadvertent contact but permit intentional contact when the pick-off sheet is depressed at a selected point. During this contact, voltage signals will be obtained that relate to the coordinates of the contacted point. Other separation means, including an air gap, can also be used to prevent inadvertant contact.

Referring now to Figure 3, this shows another embodiment of sensor, which is particularly preferred for larger sensors than those preferred for the structure of Figures 1 and 2.

In this case it is desired for the voltage gradient to decrease from the corners of the sensor toward the centre of each edge. Thus in this embodiment of sensor 10' the insulative regions 26' are formed with decreasing length toward the centre, and the gaps 24' (the resistors) increase in width. The sensor of Figure 3 measures 30 cm (12 inches) along an edge, the insulator regions decrease from about 2.54 cm to 0.51 cm (1 inch to 0.2 inch), and the intervening spaces increase from about 0.06 to 2.03 cm (0.025 to 0.8 inch) for a resistivity of the resistive layer of 10000 ohms per square. The resistivity of the strip resistance element is typically 100 ohms per square 0.25 cm (0.1 inch) wide.

With the construction according to the invention substantially non-bowed electric equipotential lines are produced when appropriate voltages are applied. in this way, essentially all of the area between the opposite row of insulative regions is usable for the active area of the sensor. Thus, a very small border of non-usable region exists, and this peripheral border is easily covered with a bezel or the like of a display unit.

From the foregoing, it can be seen that a position sensitive device has been achieved wherein a maximum active area is achieved by substantially eliminating the bow of equipotential lines proximate the edges of the sensor. In particular, this improvement is achieved using substantially simplified fabrication steps. Both the resistance border (of any of the configurations discussed above) and the resistive layer are produced typically by screen printing of an appropriate ink if the sensor is to be opaque. For a transparent sensor, the resistive layer can be semiconducting metal oxide, for example, deposited upon a transparent substrate. The resistance border can be applied by screen printing using an appropriate ink since this portion does not need to be transparent. In either an opaque or a transparent sensor, the insulative regions proximate the edges are formed by either not depositing the resistive coating (particularly easily done for opaque sensors) or by removing the coating in these regions after a deposition of the resistive coating over the complete surface. Furthermore, the traces can be formed by the screen deposition of conductive material.

Although only specific embodiments are described herein, it will be recognised by persons versed in the art that the teachings contained herein will permit fabrication of other embodiments of the present invention. For example, although the insulation regions are shown as being aligned along a straight row, such row of regions can be bowed as may be desirable or necessary for a specific application.

## Claims

1. A position touch sensor (10), which comprises:
   (a) a resistive layer (18) having a selected substantially uniform resistivity throughout said layer;
   (b) a resistance element (16) having elongate segments respectively positioned generally along each of the perimeter edges of said resistive layer (18) for providing orthogonal electrical fields in said resistive layer (18), each of said segments of the resistance element (16), (i) having opposite ends joined to proximate ends of the adjoining segments of the resistance element (16), and (ii) being in electrical connection with said resistive layer (18);
   (c) a plurality of discontinuous insulator regions (26) of selected effective lengths in said resistive layer (18) arranged along a selected path alongside the said segments of the resistance element (16), and defining spaces of selected effective lengths and width between adjacent of said insulator regions, said resistivity of said resistive layer (18) producing in said spaces resistor electrode elements (24) having selected values of resistance, said selected effective lengths of said insulator regions (26) and said selective resistance values of said resistor electrode elements (24) being selected to produce a selected voltage gradient along said path to compensate for any voltage drop along said resistance element (16) when the said orthogonal fields are introduced into the resistive layer (18) through said resistor electrode elements (24); and
   (d) means for deriving output signals corresponding to coordinates of a selected point on said resistive layer (18).

2. A sensor according to claim 1, wherein said resistance element (16) is continuous, has a uniform resistivity and is in continuous contact with said resistive layer (18).

3. A sensor according to claim 1 or 2, wherein said means for deriving output signals comprises one of the following:
   (a) a capacitive element for placement adjacent said resistive layer (18) at said selected point, and a circuit connected to the ends of said segments of the resistance element to measure the effect of said capacitive element at said selected point and to produce said output signals;
   (b) a capacitive element for placement in contact with said resistive layer (18) at said selected point, and a circuit connected between said capacitive element and the ends of said segments of the resistance element to measure the effect of said capacitive element at said selected point and to produce said output signals;
   (c) a resistive element for placement in contact with said resistive layer (18) at said selected point, and a circuit connected between said resistive element and said ends of said segments of the resistance element to measure the effect of said resistive element at said selected point and produced said output signals;

(d) a circuit connected to said ends of said segments of the resistance element to introduce orthogonal electrical fields in said resistive layer and a conductive means for contacting said resistive layer at said selected point to obtain voltage signals from said resistive layer at said point.

4.  A sensor according to Claim 3, subparagraph (d), wherein said conductive means is a conductive flexible pick-off sheet (28) uniformly spaced from said resistive layer (18) but permitting intentional contact at said selected point with means for preventing inadvertent contact which means is preferably a plurality of insulative islands positioned between said resistive layer (18) and said conductive flexible pickoff sheet (28).

5.  A sensor according to any preceding claim, wherein said selected effective length of said insulator regions (26) decreases from each corner of said resistive layer toward a centreline of each of the perimeter edges of the resistive layer (18), and said effective length of spaces between adjacent of said insulator regions (26) increases from each corner of said resistive layer toward said centreline of said perimeter edges, and all of said insulator regions (26) are a uniform width perpendicular to said path.

6.  A sensor according to any of claims 1 to 4, wherein said insulator regions (26) are positioned along a selected portion of said path, said selected portion being substantially one third of said perimeter edges of said resistive layer (18) closest to its corners, said selected effective length of said insulator regions (20) being uniform and said selected effective length of said spacings (24) between said insulator regions (26) being uniform, said insulator regions (26) having a uniform width perpendicular to said path.

7.  A sensor according to any preceding claim, wherein the resistivity of the resistive layer is about 10000 ohms per square and the resistivity of the resistance elements is about 100 ohms per square and either:

    (a) each of the perimeter edges of the resistive layer (18) is about 10.2 cm (four inches) long, and said selected effective length of each of said insulator regions (26) is about 6.35 mm (0.25 inch), said insulator regions (26) are about 1.27 mm (0.05 inch) wide, and said selected length of said spaces between insulator regions (26) is about 1.02 mm (0.04 inch); or

    (b) each of the perimeter edges of the resistive layer (18) is about 30.5 cm (twelve inches) long, said selected effective length of said insulator regions (26) uniformly decreases from about 2.5 cm (1.0 inch) proximate the corners of the resistive layer (18) to about 5.1 mm (0.2 inch) towards the centreline of each perimeter edge of the resistive layer (18) and said selected length of said spaces between said insulator regions increases from about 0.64 mm (0.025 inch) proximate said corners to about 2.0 cm (0.8 inch) towards said centreline.

8.  A sensor according to claim 2 or any claims dependant thereon, which provides an active area having a linear output response, wherein:

    (a) the resistive layer (18) comprises a material having a selected substantially uniform resistivity, $R_L$,

    (b) the continuous resistance element (16) has a substantially uniform resistivity, $R_E$, said resistivity RE being about 0.01 times said resistivity $R_L$;

    (c) the plurality of discontinuous insulator regions (26) are devoid of said resistive-layer material, and the selected path in said resistive layer (18), in which they are arranged, is alongside the said segments of the said resistance element (16), and

    (d) the means for deriving output signals includes voltage means for producing said orthogonal fields, a conductive means for contacting said resistive layer at said selected point and further circuit means connected between said conductive means and said resistance elements for determining potentials of said fields at said selected point as a measure of co-ordinates of said selected point.

9.  A sensor according to claim 8, wherein the said conductive means comprises a conductive flexible pick-off sheet (28) according to claim 4.

10. A sensor according to claim 9, wherein the further circuit means is connected between said pickoff sheet (28) and said ends of the said segments of the resistance element (16).

EP 0 249 417 B1

**Patentansprüche**

1. Berührungsempfindlicher Positionsmeßfühler (10), der folgendes aufweist:
   (a) eine Widerstandsschicht (18), die einen gewählten, im wesentlichen in der ganzen Schicht gleichmäßigen spezifischen Widerstand hat;
   (b) ein Widerstandelement (16), welches langgestreckte Segmente dhat, die jeweils im allgemeinen längs jedes der Umfangsränder der Widerstandsschicht (18) angeordnet sind, um in der Widerstandsschicht (18) orthogonale elektrische Felder zu erzeugen, wobei jedes der Segmente des Widerstandelements (16) (i) gegenüberliegende Enden aufweist, die mit den benachbarten Enden der angrenzenden Segmente des Widerstandelements (16) verbunden sind, und (ii) mit der Widerstandsschicht (18) in elektrischer Verbindung steht;
   (c) eine Vielzahl von diskontinuierlichen Isolierbereichen (26) von jeweils gewählter wirksamer Länge in der Widerstandsschicht (18), die entlang eines gewählten Pfades längsseits der Segmente des Widerstandelements (16) angeordnet sind und Räume von gewählter wirksamer Länge und Breite zwischen benachbarten Isolierbereichen bilden, wobei der spezifische Widerstand der Widerstandsschicht (18) in diesen Räumen Widerstandselektrodenelemente (24) erzeugt, die gewählte Widerstandswerte haben, wobei die gewählten wirksamen Längen der Isolierbereiche (26) und die selektiven Widerstandswerte der Widerstandselektrodenelemente (24) so gewählt sind, daß ein gewählter Spannungsgradient längs des Pfades erzeugt wird, um jeglichen Spannungsabfall längs des Widerstandelements (16) auszugleichen, wenn die orthogonalen Felder durch die Widerstandselektrodenelemente (24) in die Widerstandsschicht (18) eingeführt werden; und
   (d) eine Einrichtung zum Ableiten von Ausgangssignalen, die Koordinaten eines gewählten Punktes auf der Widerstandsschicht (18) entsprechen.

2. Meßfühler nach Anspruch 1, wobei das Widerstandelement (16) durchgehend ist, einen gleichmäßigen spezifischen Widerstand hat und mit der Widerstandsschicht (18) in durchgehendem Kontakt steht.

3. Meßfühler nach Anspruch 1 oder 2, wobei die Einrichtung zum Ableiten von Ausgangssignalen eine der folgendem Komponenten aufweist:
   (a) ein kapazitives Element zum Anbringen angrenzend an die Widerstandsschicht (18) an dem gewählten Punkt, und einen Schaltkreis, der mit den Enden der Segmente des Widerstandelements verbunden ist, um die Wirkung des kapazitiven Elements an dem gewählten Punkt zu messen und die Ausgangssignale zu erzeugen;
   (b) ein kapazitives Element zum Anbringen in Kontakt mit der Widerstandsschicht (18) an dem gewählten Punkt, und einen Schaltkreis, der zwischen das kapazitive Element und die Enden der Segmente des Widerstandelements geschaltet ist, um die Wirkung des kapazitiven Elements an dem gewählten Punkt zu messen und die Ausgangssignale zu erzeugen;
   (c) ein Widerstandelement zum Anbringen in Kontakt mit der Widerstandsschicht (18) an dem gewählten Punkt, und einen Schaltkreis, der zwischen das kapazitive Element und die Enden der Segmente des Widerstandelements geschaltet ist, um die Wirkung des Widerstandelements an dem gewählten Punkt zu messen und die Ausgangssignale zu erzeugen;
   (d) einen Schaltkreis, der mit den Enden der Segmente des Widerstandelements verbunden ist, um orthogonale elektrische Felder in der Widerstandsschicht (18) einzuleiten, und eine leitfähige Einrichtung zur Kontaktierung der Widerstandsschicht an dem gewählten Punkt, um von der Widerstandsschicht an diesem Punkt Spannungssignale zu erhalten.

4. Meßfühler nach Anspruch 3, Unterabsatz (d), wobei die leitfähige Einrichtung eine leitfähige, flexible Abgriff-Folie (28) ist, die von der Widerstandsschicht (18) einen gleichmäßigen Abstand hat, aber einen beabsichtigten Kontakt an dem gewählten Punkt erlaubt, mit einer Einrichtung, die einen unbeabsichtigten Kontakt verhindert und die vorzugsweise aus einer Vielzahl von isolierenden Inseln besteht, welche zwischen der Widerstandsschicht (18) und der leitfähigen, flexiblen Abgriff-Folie (28) angeordnet sind.

5. Meßfühler nach einem der vorhergehenden Ansprüche, wobei die gewählte wirksame Länge der Isolierbereiche (26) von jeder Ecke der Widerstandsschicht aus zu einer Mittellinie jeder der Umfangskanten der Widerstandsschicht (18) abnimmt, und die wirksame Länge von Räumen zwischen einander benachbarten Isolierbereichen (26) von jeder Ecke der Widerstandsschicht aus zu der Mittellinie der Umfangskanten zunimmt, und alle Isolierbereiche (26) eine gleichmäßige Breite rechtwinklig zu dem Pfad haben.

8

**6.** Meßfühler nach einem der Ansprüche 1 bis 4, wobei die Isolierbereiche (26) längs eines gewählten Teils des Pfades angeordnet sind, wobei der gewählte Teil im wesentlichen ein Drittel der Umfangskanten der Widerstandsschicht (18), den Ecken derselben am nächsten, ausmacht, die gewählte wirksame Länge der Isolierbereiche (20) gleichmäßig ist und die gewählte wirksame Länge der Abstände (24) zwischen den Isolierbereichen (26) gleichmäßig ist, wobei diese Isolierbereiche (26) eine gleichmäßige Breite rechtwinklig zu dem Pfad haben.

**7.** Meßfühler nach einem der vorhergehenden Ansprüche, wobei der spezifische Widerstand der Widerstandsschicht etwa 10000 Ohm pro Quadrat und der spezifische Widerstand der Widerstandelemente etwa 100 Ohm pro Quadrat ist und entweder:

(a) jede der Umfangskanten der Widerstandsschicht (18) etwa 10,2 cm (vier Zoll) lang und die gewählte wirksame Länge jedes der Isolierbereiche (26) etwa 6,35 mm (0,25 Zoll) ist, die Isolierbereiche (26) etwa 1,27 mm (0,05 Zoll) breit sind, und die gewählte Länge der Räume zwischen den Isolierbereichen (26) etwa 1,02 mm (0,04 Zoll) beträgt; oder

(b) jede der Umfangskanten der Widerstandsschicht (18) etwa 30,5 cm (12 Zoll) lang ist, die gewählte wirksame Länge der Isolierbereiche (26) gleichmäßig von etwa 2,5 cm (1,0 Zoll) in der Nähe der Ecken der Widerstandsschicht (18) auf etwa 5,1 mm (0,2 Zoll) zur Mittellinie jeder Umfangskante der Widerstandsschicht (18) abnimmt, und die gewählte Länge der Räume zwischen den Isolierbereichen von etwa 0,64 mm (0,025 Zoll) in der Nähe der Ecken auf etwa 2,0 cm (0,8 Zoll) zur Mittellinie zunimmt.

**8.** Meßfühler nach Anspruch 2 oder einem der davon abhängigen Ansprüche, der einen aktiven Bereich mit linearem Ausgangsverhalten bietet, wobei:

(a) die Widerstandsschicht (18) ein Material aufweist, welches einen gewählten, im wesentlichen gleichförmigen spezifischen Widerstand $R_L$ hat,

(b) das durchgehende Widerstandselement (16) einen im wesentlichen gleichförmigen spezifischen Widerstand $R_E$ hat, wobei der spezifische Widerstand $R_E$ etwa 0,01 mal so groß ist wie der spezifische Widerstand $R_L$;

(c) die Vielzahl von diskontinuierlichen Isolierbereichen (26) vom Material der Widerstandsschicht frei ist, und der gewählte Pfad in der Widerstandsschicht (18), in dem sie angeordnet sind, längsseits der Segmente des Widerstandselements (16) verläuft, und

(d) die Einrichtung zum Ableiten von Ausgangssignalen eine Spannungseinrichtung zur Erzeugung der orthogonalen Felder, eine leitfähige Einrichtung zum Kontaktieren der Widerstandsschicht an dem gewählten Punkt und weitere Schaltungseinrichtungen aufweist, die zwischen die leitfähige Einrichtung und die Widerstandselemente geschaltet sind, um Potentiale der Felder an dem gewählten Punkt als Maß von Koordinaten des gewählten Punktes zu bestimmen.

**9.** Meßfühler nach Anspruch 8, wobei die leitfähige Einrichtung eine leitfähige, flexible Abgriff-Folie (28) gemäß Anspruch 4 aufweist.

**10.** Meßfühler nach Anspruch 9, wobei die weiteren Schaltungseinrichtungen zwischen die Abgriff-Folie (28) und die Enden der Segmente des Widerstandselements (16) geschaltet ist.

**Revendications**

**1.** Capteur tactile (10) de position, qui comporte :

(a) une couche résistive (18) ayant une résistivité choisie, sensiblement uniforme, sur toute ladite couche ;

(b) un élément à résistance (16) ayant des segments allongés positionnés respectivement et d'une façon générale le long de chacun des bords périphériques de ladite couche résistive (18) pour produire des champs électriques orthogonaux dans ladite couche résistive (18), chacun desdits segments de l'élément à résistance (16), (i) ayant des extrémités opposées jointes à des extrémités proches des segments adjacents de l'élément à résistance (16), et (ii) étant en connexion électrique avec ladite couche résistive (18) ;

(c) plusieurs régions isolantes discontinues (26) de longueurs utiles choisies dans ladite couche résistive (18), agencées suivant un trajet choisi le long desdits segments de l'élément à résistance (16), et définissant des espaces de longueurs et largeur utiles choisies entre certaines, adjacentes, desdites régions isolantes, ladite résistivité de ladite couche résistive (18) produisant dans lesdits espaces des éléments d'électrodes à résistance (24) ayant des valeurs choisies de résistance, lesdites longueurs utiles choisies desdites régions isolantes (26) et lesdites valeurs de résistance choisies desdits éléments d'électrodes (24) à résistance étant choisies pour produire un gradient de tension choisi le long dudit trajet afin de compenser toute chute de tension le long dudit élément à résistance (16) lorsque lesdits champs orthogonaux sont introduits dans la couche résistive (18) par l'intermédiaire desdits éléments d'électrodes (24) à résistance ; et

(d) des moyens destinés à dériver des signaux de sortie correspondant à des coordonnées d'un point choisi sur ladite couche résistive (18).

2. Capteur selon la revendication 1, dans lequel ledit élément à résistance (16) est continu, possède une résistivité uniforme et est en contact continu avec ladite couche résistive (18).

3. Capteur selon la revendication 1 ou 2, dans lequel lesdits moyens destinés à dériver les signaux de sortie comprennent l'un des éléments suivants :

(a) un élément capacitif destiné à être placé à proximité immédiate de ladite couche résistive (18) audit point choisi, et un circuit connecté aux extrémités desdits segments de l'élément à résistance pour mesurer l'effet dudit élément capacitif audit point choisi et pour produire lesdits signaux de sortie ;

(b) un élément capacitif destiné à être placé en contact avec ladite couche résistive (18) audit point choisi, et un circuit connecté entre ledit élément capacitif et les extrémités desdits segments de l'élément à résistance pour mesurer l'effet dudit élément capacitif audit point choisi et pour produire lesdits signaux de sortie ;

(c) un élément résistif destiné à être placé en contact avec ladite couche résistive (18) audit point choisi, et un circuit connecté entre ledit élément résistif et lesdites extrémités desdits segments de l'élément à résistance pour mesurer l'effet dudit élément résistif audit point choisi et pour produire lesdits signaux de sortie ;

(d) un circuit connecté auxdites extrémités desdits segments de l'élément à résistance pour introduire des champs électriques orthogonaux dans ladite couche résistive et un moyen conducteur destiné à établir un contact avec ladite couche résistive audit point choisi pour obtenir des signaux de tension à partir de ladite couche résistive audit point.

4. Capteur selon la revendication 3, paragraphe (d), dans lequel ledit moyen conducteur est une feuille captrice flexible conductrice (28) espacée uniformément de ladite couche résistive (18), mais permettant un contact intentionnel audit point choisi, avec des moyens destinés à empêcher un contact accidentel, lesquels moyens comprennent de préférence plusieurs îlots isolants positionnés entre ladite couche résistive (18) et ladite feuille captrice flexible conductrice (28).

5. Capteur selon l'une quelconque des revendications précédentes, dans lequel ladite longueur utile choisie desdites régions isolantes (26) diminue à partir de chaque angle de ladite couche résistive vers un axe central de chacun des bords périphériques de la couche résistive (18), et ladite longueur utile d'espaces entre certaines, adjacentes, desdites régions isolantes (26), augmente à partir de chaque angle de ladite couche résistive vers ledit axe central desdits bords périphériques, et toutes lesdites régions isolantes (26) ont une largeur uniforme perpendiculairement audit trajet.

6. Capteur selon l'une quelconque des revendications 1 à 4, dans lequel lesdites régions isolantes (26) sont positionnées le long d'une partie choisie dudit trajet, ladite partie choisie étant sensiblement un tiers desdits bords périphériques de ladite couche résistive (18) le plus proche de ses angles, ladite longueur utile choisie desdites régions isolantes (20) étant uniforme et ladite longueur utile choisie desdits espaces (24) entre lesdites régions isolantes (26) étant uniforme, lesdites régions isolantes (26) ayant une largeur uniforme perpendiculairement audit trajet.

7. Capteur selon l'une quelconque des revendications précédentes, dans lequel la résistivité de la couche résistive est d'environ 10 000 ohms par carré et la résistivité des éléments à résistance est d'environ 100 ohms par carré, et soit :

(a) chacun des bords périphériques de la couche résistive (18) a une longueur d'environ 10,2 cm (4 inches), et ladite longueur utile choisie de chacune desdites régions isolantes (26) est d'environ 6,35 mm (0,25 inch), lesdites régions isolantes (26) ont une largeur d'environ 1,27 mm (0,05 inch), et ladite longueur choisie desdits espaces entre des régions isolantes (26) est d'environ 1,02 mm (0,04

10

inch) ; soit

(b) chacun des bords périphériques de la couche résistive (18) a une longueur d'environ 30,5 cm (12 inches), ladite longueur utile choisie desdites régions isolantes (26) diminue uniformément d'environ 2,5 cm (1,0 inch) à proximité des angles de la couche résistive (18) jusqu'à environ 5,1 mm (0,2 inch) vers l'axe central de chaque bord périphérique de la couche résistive (18) et ladite longueur choisie desdits espaces entre lesdites régions isolantes augmente d'environ 0,64 mm (0,025 inch) à proximité desdits angles jusqu'à environ 2,0 cm (0,8 inch) vers ledit axe central.

8. Capteur selon la revendication 2 ou l'une quelconque des revendications qui en dépendent, qui présente une aire active ayant une réponse de sortie linéaire, dans lequel :

(a) la couche résistive (18) comprend une matière ayant une résistivité choisie, sensiblement uniforme, $R_L$,

(b) l'élément à résistance continu (16) présente une résistivité sensiblement uniforme, $R_E$, ladite résistivité $R_E$ étant d'environ 0,01 fois ladite résistivité $R_L$ ;

(c) les régions isolantes discontinues (26) sont dépourvues de ladite matière de la couche résistive, et le trajet choisi dans ladite couche résistive (18), dans lequel elles sont disposées, s'étend le long desdits segments dudit élément à résistance (16), et

(d) les moyens destinés à dériver des signaux de sortie comprennent des moyens de tension destinés à produire lesdits champs orthogonaux, un moyen conducteur destiné à établir un contact avec ladite couche résistive audit point choisi et d'autres moyens de circuits connectés entre ledit moyen conducteur et lesdits éléments à résistance pour déterminer les potentiels desdits champs audit point choisi en tant que mesure de coordonnées dudit point choisi.

9. Capteur selon la revendication 8, dans lequel ledit moyen conducteur comprend une feuille captrice flexible conductrice (28) selon la revendication 4.

10. Capteur selon la revendication 9, dans lequel les autres moyens de circuit sont connectés entre ladite feuille captrice (28) et lesdites extrémités desdits segments de l'élément à résistance (16).

Fig.1.

Fig.2.

Fig.3.